# EUROPÄISCHE PATENTSCHRIFT

(11) **EP 2 740 851 B1**
(45) Veröffentlichungstag und Bekanntmachung des Hinweises auf die Patenterteilung: **08.02.2017**
(21) Anmeldenummer: 12195620.5
(22) Anmeldetag: 05.12.2012
(51) Int. Cl.: E04B 1/76, F16B 13/00

(54) **Spreizelement mit Abdeckscheibe**
Spreading element with a cover panel
Élément écarteur avec vitre de recouvrement

(43) Veröffentlichungstag der Anmeldung: 11.06.2014
(73) Patentinhaber: EJOT Baubefestigungen GmbH, 57334 Bad Laasphe (DE)
(72) Erfinder: Knebel, Ulrich, 57319 Bad Berleburg-Berghausen (DE)
(74) Vertreter: Hohgardt, Martin

(56) Entgegenhaltungen:
- EP-A2- 1 357 301
- EP-A2- 2 042 666
- DE-A1-102009 005 823
- DE-U- 7 125 107
- DE-U1- 8 512 251

## Beschreibung

Die vorliegende Erfindung betrifft ein Befestigungssystem, insbesondere zur Befestigung von Dämmstoff an einem Untergrund, beispielsweise an einer Gebäudeaußenwand sowie ein entsprechendes Befestigungsverfahren.

Befestigungssysteme zur Befestigung von Dämmstoffplatten werden häufig als Dämmstoffhalter bezeichnet. Derartige Dämmstoffhalters weisen häufig einen Dübelschaft und einen daran angeordneten Teller auf. Bei der Montage wird der Dübelschaft in einer Öffnung in dem Dämmstoff und in einer Öffnung in dem dahinterliegenden Untergrund angeordnet und mit einem Spreizelement in dem Untergrund befestigt. Wie zum Beispiel in DE 85 12 251 U1 gezeigte, kann der am Dübelschaft angeordnete Teller dabei auf der Dämmstoffoberfläche aufliegen. Alternativ kann der Teller in einer Ausnehmung in dem Dämmstoff aufliegen. Unabhängig von der Anordnung des Tellers wird durch den Teller der Dämmstoff an dem Untergrund gehalten.

Im Stand der Technik sind verschiedene Möglichkeiten zur Bildung einer Ausnehmung beziehungsweise Vertiefung in dem Dämmstoff für eine vertiefte Montage beschrieben. Eine Ausnehmung kann beispielsweise durch das Einschneiden des Dämmstoffs am Umfang des Tellers und durch das Komprimieren des Dämmstoffs unter dem Teller durch das Eindrücken beziehungsweise Einziehen des Tellers gebildet werden. Ein derartiges Einschneiden ist beispielsweise in EP 1 318 250 A2 beschrieben. Alternativ kann zum Beispiel das Dämmstoffmaterial unter dem Teller gelöst werden. Dieses Lösen wird auch als Fräsen bezeichnet und ist zum Beispiel in EP 2 042 666 A2 beschrieben.

Nach der Montage des Dämmstoffhalters wird die Ausnehmung in dem Dämmstoff mit dem darin angeordneten Teller häufig mit einem Material aufgefüllt, damit sich die Befestigungspunkte des Dämmstoffs nicht an der Außenseite abzeichnen. So kann zum Beispiel nach der Montage eine Abdeckscheibe von dem Monteur per Hand in der Ausnehmung angeordnet werden. Als Abdeckscheibe kann zum Beispiel eine Rondelle aus Dämmstoffmaterial verwendet werden.

Im Stand der Technik sind auch Verfahren und Vorrichtungen bekannt mit denen eine Dämmstoffrondelle bei der Montage des Dämmstoffhalters in der Ausnehmung angeordnet wird. EP 2 378 019 A2 beschreibt ein Verfahren zur Montage einer Dämmstoffplatte an einer Unterkonstruktion und zum Anordnen einer Dämmstoffrondelle in einer Ausnehmung in der Dämmstoffplatte mit Hilfe eines speziellen Montagewerkzeugs. Hierbei muss die Dämmstoffrondelle eine Öffnung aufweisen, um dem speziellen Montagewerkzeug zu ermöglichen das Spreizelement zu kontaktieren.

Derartige Verfahren haben allerdings den Nachteil, dass für die Montage des Dämmstoffhalters und das Anordnen der Dämmstoffrondelle ein derartiges Spezialwerkzeug notwendig ist. Außerdem wird durch die Öffnung in der Dämmstoffrondelle die Dämmeigenschaft wesentlich reduziert.

Die Aufgabe der vorliegenden Erfindung ist daher, ein Befestigungssystem und ein entsprechendes Befestigungsverfahren bereitzustellen, bei dem die Dämmstoffplatte ohne Spezialwerkzeug einfach und schnell montiert werden kann und nach der Montage bestmögliche Dämmeigenschaften aufweist.

Diese Aufgabe wird erfindungsgemäß durch das Befestigungssystem gemäß Anspruch 1 und durch das Verfahren gemäß Anspruch 15 gelöst.

Das erfindungsgemäße Befestigungssystem kann insbesondere zur Befestigung von Dämmstoff an einem Untergrund verwendet werden und weist eine Dübelhülse und ein Spreizelement auf. Die Dübelhülse weist eine Spreizzone zum Halten der Dübelhülse in einer Öffnung in dem Untergrund und einen Halteteller zum Halten des Dämmstoffs auf.

Das Spreizelement ist ausgestaltet, um zumindest teilweise in der Dübelhülse angeordnet werden zu können und das Spreizelement weist an einem ersten Ende ein Spreizmittel zum Aufspreizen der Spreizzone der Dübelhülse auf. Erfindungsgemäß weist das Befestigungssystem auch eine Abdeckscheibe auf, die an einem zweiten Ende des Spreizelements, das dem ersten Ende gegenüberliegt, angeordnet ist. Die Abdeckscheibe ist derart ausgestaltet, dass sie in einer Ausnehmung in dem Dämmstoff in dem sich der Halteteller der Dübelhülse nach der Montage befindet, angeordnet werden kann. Das Anordnen der Abdeckscheibe an dem zweiten Ende des Spreizelements kann auf unterschiedliche Weise realisiert werden. Erfindungsgemäß ist die Abdeckscheibe mit dem Spreizelement verbunden. Bevorzugt ist die Abdeckscheibe mit dem Spreizelement fest verbunden, das heißt, dass bei einer bestimmungsgemäßen Verwendung des Befestigungssystems sich die Abdeckscheibe nicht von dem Spreizelement löst. In einer weiteren bevorzugten Ausführungsform weist die Abdeckscheibe eine Öffnung auf durch die sich das Spreizelement erstreckt, so dass das zweite Ende des Spreizelements diese Öffnung verschließt. Grundsätzlich kann die Abdeckscheibe aber auch auf andere Weise mit dem zweiten Ende des Spreizelements verbunden werden. Beispielsweise kann das Spreizelement mit der Abdeckscheibe einstückig hergestellt werden. Durch die Anordnung der Abdeckscheibe an dem Spreizelement wird verhindert, dass die Dämmeigenschaften reduzieren werden, wie dies im Stand der Technik der Fall ist. Grundsätzlich ist die Abdeckscheibe aber derart mit dem Spreizelement verbunden, dass zumindest teilweise oder zeitweise während des Montagevorgangs eine axiale Bewegung des Spreizelements die gleiche axiale Bewegung der Abdeckscheibe bewirkt. Darüber hinaus kann die Abdeckscheibe auch derart mit dem Spreizelement verbunden sein, dass eine radiale Bewegung des Spreizelements zumindest teilweise oder zeitweise die gleiche radiale Bewegung der Abdeckscheibe bewirkt.

In einer bevorzugten Ausführungsform ist die Abdeckscheibe mit dem Abschnitt des zweiten Endes des Spreizelements verbunden, der von dem ersten Ende des Spreizelements am weitesten entfernt ist. Dieser Abschnitt wird im Folgenden als Endabschnitt bezeichnet. Der Endabschnitt des Spreizelements ist bei dieser Ausführungsform mit der Abdeckscheibe verbunden. Bei dieser Ausführungsform ragt das zweite Ende des Spreizelements im Wesentlichen nur aus einer Seite der Abdeckscheibe heraus. Dies ist die untere Seite der Abdeckscheibe, also die Seite, die sich nach der Montage in der Ausnehmung befindet und dann von außen nicht sichtbar ist. An der anderen Seite ragt das zweite Ende des Spreizelements gegenüber der Oberfläche der Abdeckscheibe nicht heraus oder nur so gering, dass das zweite Ende des Spreizelements mit der Oberfläche der Abdeckscheibe eine im Wesentlichen glatte Oberfläche bildet.

Das erfindungsgemäße Befestigungssystem kann ohne Spezialwerkzeug in wenigen Schritten einfach und schnell montiert werden. Insbesondere durch die erfindungsgemäße Abdeckscheibe an einem Ende des Spreizelements, kann eine Ausnehmung im Dämmstoff, in die ein Dämmstoffhalter vertieft montiert wurde, automatisch während des Montagevorgangs verschlossen werden. Dies ermöglicht, dass für die Montage des Befestigungssystems kein Spezialwerkzeug benötigt wird. Außerdem werden durch dieses Befestigungssystem die Dämmeigenschaften wesentlich verbessert.

Das erfindungsgemäße Befestigungssystem kann beispielsweise folgendermaßen montiert werden. Zunächst wird in den Untergrund und den Dämmstoff ein Loch gebohrt, das auch als Öffnung bezeichnet wird. Vorher, gleichzeitig oder nachher kann eine Ausnehmung in dem Dämmstoff gebildet werden. Eine Ausnehmung ist eine Öffnung in dem Dämmstoff, die einen größeren Querschnitt als das Loch aufweist. Vorzugsweise entspricht der Querschnitt der Ausnehmung etwa dem Querschnitt des Haltetellers oder der Querschnitt der Ausnehmung ist vorzugsweise etwas größer als der Querschnitt des Haltetellers. Die Ausnehmung kann beispielsweise mit einem entsprechenden Werkzeug gebildet werden. Die Ausnehmung kann aber zum Beispiel auch mit Hilfe des Haltetellers selbst gebildet werden.

Die Dübelhülse und das Spreizelement des erfindungsgemäßen Befestigungssystems werden dann in dem Loch angeordnet, beziehungsweise gesetzt. Nach diesem Anordnen sollte sich die Spreizzone der Dübelhülse vorzugsweise im Bereich des Untergrunds befinden. In Abhängigkeit von der verwendeten Technik zur Bildung der Ausnehmung, liegt der Halteteller der Dübelhülse dann auf der Oberfläche der Dämmstoffplatte auf oder ist in der bereits existierenden Ausnehmung angeordnet. Wenn die Dübelhülse in dem Loch angeordnet wird, kann sich das Spreizelement zumindest teilweise in der Dübelhülse befinden. Alternativ wird die Dübelhülse ohne das Spreizelement zunächst in dem Loch angeordnet und das Spreizelement erst anschließend in der Dübelhülse platziert.

In einer beispielhaften Ausführungsform wurde die Ausnehmung in der Dämmstoffplatte bereits vor der Montage des erfindungsgemäßen Befestigungssystems gebildet, so dass der Halteteller der Dübelhülse direkt in der Vertiefung platziert werden kann. Dann muss nur noch das Spreizelement in Richtung des Untergrunds bewegt werden, damit das Spreizmittel des Spreizelements die Spreizzone der Dübelhülse derart aufspreizen kann, dass die Dübelhülse in dem Untergrund fest verankert ist. Dieses Bewegen des Spreizelements wird auch als Eintreiben bezeichnet. Durch das Eintreiben des Spreizelements wird auch die daran angeordnete Abdeckscheibe bewegt und zwar in die Ausnehmung. Vorzugsweise ist der Durchmesser der Abdeckscheibe so groß wie der Durchmesser der Ausnehmung. Somit ermöglicht das erfindungsgemäße Befestigungssystem eine einfache und schnelle Montage bei der ohne zusätzliche Schritte oder zusätzliche, spezielle Werkzeuge die Abdeckscheibe in der Ausnehmung angeordnet werden kann. Im Rahmen der vorliegenden Erfindung weist die Montage das Setzen und das Eintreiben auf.

In einer anderen beispielhaften Ausführungsform wird die Ausnehmung erst bei der Montage des erfindungsgemäßen Befestigungssystems gebildet. In diesem Fall wird bei dem Anordnen der Dübelhülse der Halteteller auf der Oberfläche beziehungsweise in der Nähe der Oberfläche der Dämmstoffplatte angeordnet. Die Ausnehmung kann dann beispielsweise während dem Eintreiben des Spreizelements gebildet werden. Wie oben erläutert, gibt es verschiedene Verfahren und Vorrichtungen zur Bildung der Ausnehmung. Hierfür kann beispielsweise ein entsprechendes Werkzeug und/oder der Halteteller verwendet werden. Während der Bildung der Ausnehmung kann zum Beispiel auch der Halteteller in Richtung Untergrund bewegt werden. Dabei bewegt sich der Halteteller vorzugsweise relativ zu der Spreizzone der Dübelhülse. Gleichzeitig mit dem Halteteller oder nach dem Bewegen des Haltetellers wird auch das Spreizelement eingetrieben und somit die erfindungsgemäß an dem Spreizelement angeordnete Abdeckscheibe in der gebildeten Ausnehmung angeordnet.

Das Spreizelement gemäß der vorliegenden Erfindung kann beispielsweise eine Schraube oder ein Nagel sein. Eine Spreizschraube kann zum Beispiel drehend in die Dübelhülse in Richtung des Untergrunds bewegt werden, um die Spreizzone aufzuspreizen, während ein Spreiznagel zum Beispiel einfach nur in Richtung des Untergrunds bewegt wird.

Gemäß einer bevorzugten Ausführungsform der vorliegenden Erfindung weist das Spreizelement mindestens ein Vortriebsmittel auf, mit dem das Spreizelement in Richtung des Untergrunds in der Dübelhülse bewegt werden kann. Das Vortriebsmittel ist ein Teil oder ein Bereich des Spreizelements, der derart ausgestaltet ist, dass eine Bewegung an das Spreizelement übertragen werden kann, um das Spreizelement in Richtung des Untergrunds, also vorwärts zu treiben. Vorzugsweise befindet sich dieses mindestens eine Vortriebsmittel an dem zweiten Ende des Spreizelements. Weiter bevorzugt befindet sich dieses mindestens eine Vortriebsmittel in dem Endabschnitt des zweiten Endes des Spreizelements, also in dem Abschnitt der von dem ersten Ende des Spreizelements am weitesten entfernt ist. Vorzugsweise ist die Abdeckscheibe an dem Vortriebsmittel angeordnet oder mit dem Vortriebsmittel verbunden.

Vorzugsweise weist die Abdeckscheibe mindestens eine Öffnung auf, durch die sich das zweite Ende des Spreizelements, vorzugsweise der Endabschnitt des Spreizelements zumindest teilweise erstreckt. Vorzugsweise bildet ein Teil des zweiten Endes des Spreizelements das Vortriebsmittel, wobei das Vortriebsmittel vorzugsweise in der Öffnung der Abdeckscheibe angeordnet ist. Weiter bevorzugt füllt dieses mindestens eine Vortriebsmittel die mindestens eine Öffnung in der Abdeckscheibe aus. Wenn es sich bei dem Spreizelement um eine Spreizschraube handelt, ist das Vortriebsmittel vorzugsweise derart ausgestaltet, dass ein Schraubmittel über das Vortriebsmittel eine drehende Bewegung an das Spreizelement weiterleiten kann. Hierbei kann es sich um ein direktes oder um ein indirektes Weiterleiten handeln. Beispielsweise kann es sich bei dem Vortriebsmittel um eine Öffnung für einen Inbusschlüssel handeln. Wenn es sich bei dem Spreizelement um einen Spreiznagel handelt, muss das Vortriebsmittel lediglich eine Bewegung in Richtung des Untergrunds weiterleiten. Hierfür kann das Vortriebsmittel beispielsweise als ein Kopf ausgestaltet sein, auf den man mit einem Hammer schlagen kann, um den Spreiznagel in der Dübelhülse in Richtung des Untergrunds zu bewegen. In dieser Ausführungsform kann der Kopf, der durch den Endabschnitt des Spreizmittels gebildet wird, beispielsweise leicht gegenüber der äußeren Oberfläche der Abdeckscheibe, also der Oberfläche die nach der Montage von außen zu sehen ist, vorstehen, damit die Abdeckscheibe bei der Montage zum Beispiel nicht durch den Hammer beschädigt wird. Vorzugsweise ist das Vortriebsmittel derart ausgestaltet, dass bei der Montage eine Beschädigung der Abdeckscheibe verhindert wird.

Wie bereits oben erläutert, erstreckt sich in einer bevorzugten Ausführungsform das zweite Ende des Spreizelements zumindest teilweise durch die mindestens eine Öffnung in der Abdeckscheibe. Um eine bestmögliche Dämmung zu erzielen, besteht das zweite Ende des Spreizelements in einer bevorzugten Ausführungsform zumindest teilweise aus einem Material mit einer geringen Wärmeleitfähigkeit. Vorzugsweise handelt es sich hierbei um einen Kunststoff.

In einer alternativen Ausführungsform, ist das Vortriebsmittel ein Teil der Abdeckscheibe. In dieser Ausführungsform ist die Abdeckscheibe vorzugsweise drehfest an dem zweiten Ende des Spreizelements angeordnet.

Die Abdeckscheibe ist in noch einer weiteren bevorzugten Ausführungsform mittels eines Verbindungsmittels an dem Spreizelement angeordnet und somit mit dem Spreizelement verbunden beziehungsweise fest verbunden. Weiter bevorzugt befindet sich dieses Verbindungsmittel an dem Umfang des Spreizelements. Das Verbindungsmittel kann beispielsweise an dem Bereich des Spreizelements angeordnet sein, der das Vortriebsmittel bildet. Vorzugsweise besteht das Verbindungsmittel aus einem Schraubgewinde. Mit Hilfe des Schraubgewindes kann eine Abdeckscheibe schnell und unkompliziert an dem Spreizelement angeordnet werden. Vorzugsweise ist die Drehrichtung des Gewindes der Schraubverbindung entgegensetzt zu der Drehrichtung des Gewindes des Spreizmittels, so dass beim Einbringen des Spreizelements in den Dübelschaft und in die Vertiefung in der Dämmstoffplatte, sich die Abdeckscheibe nicht löst. In einer alternativen Ausführungsform ist das Verbindungsmittel ein Klebstoff zur Bildung eine Klebeverbindung. Mit Hilfe einer Klebeverbindung kann die Abdeckscheibe fest mit dem Spreizelement verbunden werden. Eine weitere Alternative ist, das Verbindungsmittel aus Vorsprüngen an dem Spreizelement zu bilden, so dass die Abdeckscheibe formschlüssig mit dem Spreizelement verbunden werden kann.

In einer weiteren bevorzugten Ausführungsform hat die Abdeckscheibe eine runde Geometrie. Eine runde Geometrie ist auch bei Haltetellern bevorzugt. In einem anderen Beispiel kann die Abdeckscheibe auch eine andere Geometrie aufweisen, wie z.B. dreieckig, viereckig, beispielsweise quadratisch oder vieleckig.

In noch einer bevorzugten Ausführungsform weist die Abdeckscheibe an ihrem Umfang ein Schraubgewinde auf, das vorzugsweise eine bestimmte Steigung aufweist. Dieses Schraubgewinde kann beispielsweise derart an der Abdeckscheibe angeordnet sein, dass sich die Abdeckscheibe bei der Montage in den Dämmstoff zusätzlich selbst einfräst, beziehungsweise einschneidet. Dadurch kann ein besonders dichter Übergang zwischen der Abdeckscheibe und der Dämmstoffplatte erzielt werden und Wärmebrücken können dadurch effizient verhindert werden. Die Steigung des Schraubgewindes an der Abdeckscheibe, das bedeutet der Weg beziehungsweise der Höhenunterschied, der durch eine Umdrehung zurückgelegt wird, entspricht in einer bevorzugten Ausführungsform der Steigung des Spreizmittels des Spreizelements, wenn zum Beispiel eine Spreizschraube als Spreizelement verwendet wird. Somit kann gewährleistet werden, dass sich die Abdeckscheibe beim Einschrauben des Befestigungssystems mit der gleichen Geschwindigkeit in den Dämmstoff bewegen kann, wie das restliche Spreizelement.

In einer bevorzugten Ausführungsform weist der Halteteller an der dem Dämmstoff zugewandten Seite mindestens ein Schneidmittel auf. Mit Hilfe eines derart angeordneten Schneidmittels kann die Ausnehmung in dem Dämmstoff gebildet werden. Das mindestens eine Schneidmittel kann beispielsweise durch einen Schneidring gebildet werden, mit dem der Dämmstoff eingeschnitten werden kann. Das dazwischenliegende Dämmstoffmaterial kann durch den Halteteller eingedrückt, das heißt komprimiert werden. In einer weiteren Ausführungsform kann anstatt eines Schneidrings mindestens ein Schneidzahn verwendet werden. Alternativ können auch mehrere Schneidzähne verwendet werden, die das Eindringen des Haltetellers in den Dämmstoff erleichtern.

Im Rahmen der vorliegenden Erfindung können allerdings auch andere Arten von Schneidmitteln verwendet werden. Das mindestens eine Schneidmittel kann beispielsweise auch derart an der dem Dämmstoff zugewandten Seite des Haltetellers angeordnet sein, dass es das Dämmstoffmaterial unter dem Halteteller zumindest teilweise löst. Ein derartiges Lösen von Dämmstoffmaterial wird beispielsweise auch als Fräsen bezeichnet.

In noch einer bevorzugten Ausführungsform weist die Dübelhülse des erfindungsgemäßen Befestigungssystem mindestens ein Bewegungsmittel auf, um eine Relativbewegung des Haltetellers zur Spreizzone zu ermöglichen. Das Bewegungsmittel ist ein Teil oder ein Bereich der Dübelhülse, der derart ausgestaltet ist, dass sich der Halteteller der Dübelhülse relativ zu der Spreizzone der Dübelhülse bewegen kann. Beispielweise kann es sich bei diesem mindestens einen Bewegungsmittel um eine Sollbruchstelle in der Verbindung des Haltetellers mit der Dübelhülse handeln. Eine derartige Sollbruchstelle kann bewirken, dass wenn der Halteteller während der Montage in Kontakt mit dem Dämmstoff kommt, sich der Halteteller von der restlichen Dübelhülse löst und sich der Halteteller somit relativ zu der Spreizzone bewegen kann. Hierbei kann es sich zum Beispiel um eine axiale Bewegung, d.h. eine Bewegung in Richtung der Längserstreckung der Dübelhülse handeln und/oder um eine radiale Bewegung. Alternativ kann das mindestens eine Bewegungsmittel auch aus einem Knautschbereich an der Dübelhülse bestehen. Dieser Knautschbereich bewirkt, dass wenn der Halteteller mit der Dübelhülse fest verbunden ist, eine Relativbewegung des Haltetellers zur Spreizzone über eine Stauchung der Dübelhülse stattfinden kann. Grundsätzlich kann die Dübelhülse aber auch aus zwei oder mehr Teilen bestehen, die nicht direkt miteinander verbunden sind. Beide Teile können beispielsweise durch das darin angeordnete Spreizelement miteinander verbunden sein.

In einer weiteren bevorzugten Ausführungsform der Erfindung weist das Spreizelement, vorzugsweise in dem Bereich unterhalb des Vortriebsmittels, ein Mitnahmemittel auf. Das Mitnahmemittel greift, während das Spreizelement in die Dübelhülse eingeschraubt wird, in den Halteteller ein. Durch dieses Mitnahmemittel bewegt sich die Dübelhülse, insbesondere der Halteteller mit dem Spreizelement. Hierbei kann es sich um eine axiale und/oder radiale Relativbewegung handeln. Dieses Mitnahmemittel gemäß der vorliegenden Erfindung kann eine Schraubenantriebsgeometrie, wie zum Beispiel Kreuzschlitz, Torx, Sechskant, usw. sein und kann in ein entsprechendes Gegenstück an dem Halteteller eingreifen. Wenn das Spreizelement zum Beispiel eingeschraubt wird, wird durch das Mitnahmemittel die Drehbewegung beziehungsweise radiale Bewegung des Spreizelements auf den Halteteller übertragen.

Das Spreizelement kann außerdem noch ein Schraubgewinde aufweisen. Dieses Schraubgewinde ist vorzugsweise auch am zweiten Ende des Spreizelements angeordnet, aber näher am ersten Ende des Spreizelements, als die Abdeckscheibe. Mit Hilfe dieses Schraubgewindes kann der Abstand zwischen der Abdeckscheibe und dem Halteteller eingestellt werden.

Das erfindungsgemäße Verfahren zur Befestigung von Dämmstoff an einem Untergrund weist die folgenden Schritte auf: Zunächst wird eine Öffnung durch den Dämmstoff in den Untergrund gebohrt. Danach können die Dübelhülse und ein Spreizelement mit einer daran angeordneten Abdeckscheibe in die zuvor gebohrte Öffnung eingebracht beziehungsweise gesetzt werden, wobei die Abdeckscheibe an einem zweiten Ende des Spreizelements angeordnet ist, das einem ersten Ende von dem Spreizelement gegenüberliegt und wobei ein Halteteller an der Dübelhülse den Dämmstoff an dem Untergrund fixiert. Gemäß dem erfindungsgemäßen Verfahren wird das Spreizelement in die Dübelhülse eingetrieben bis die daran angeordnete Abdeckscheibe oberflächenbündig mit der Oberfläche des Dämmstoffs abschließt.

Im Folgenden werden das erfindungsgemäße Befestigungssystem und das erfindungsgemäße Verfahren zur Befestigung von Dämmstoff beispielhaft anhand der in den nachfolgenden Figuren gezeigten Ausführungsform näher erläutert. Es zeigen:
- Fig. 1a, 1b:: Seitenansichten einer beispielhaften Ausführungsform des erfindungsgemäßen Befestigungssystems in einem Vormontagezustand und in einem Endmontagezustand, und
- Fig. 2a, 2b:: perspektivische Detailansichten einer beispielhaften Ausführungsform des Spreizelements ohne und mit Abdeckscheibe.

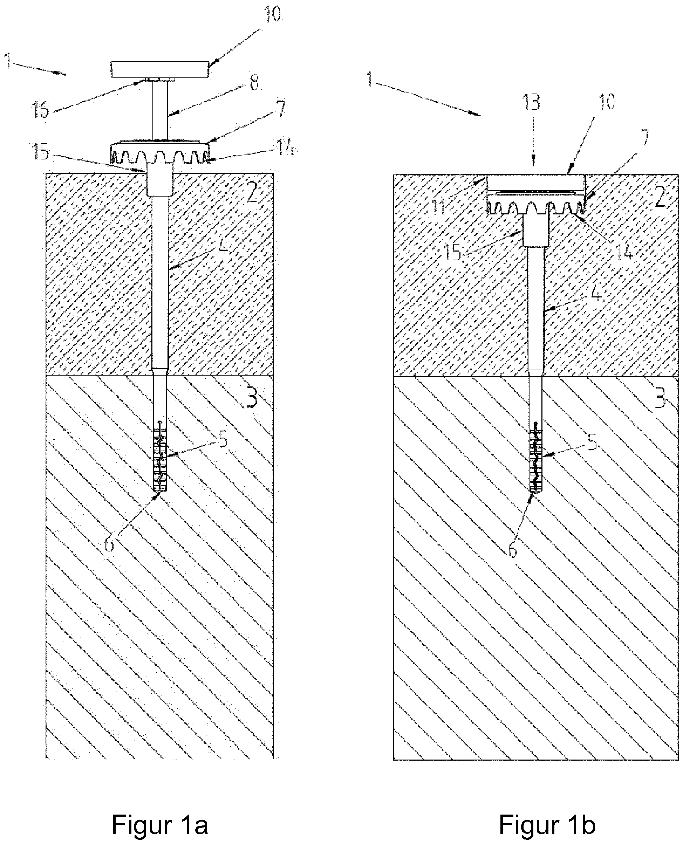

Figur 1a zeigt eine beispielhafte Ausführungsform des erfindungsgemäßen Befestigungssystems 1 in einem Vormontagezustand.

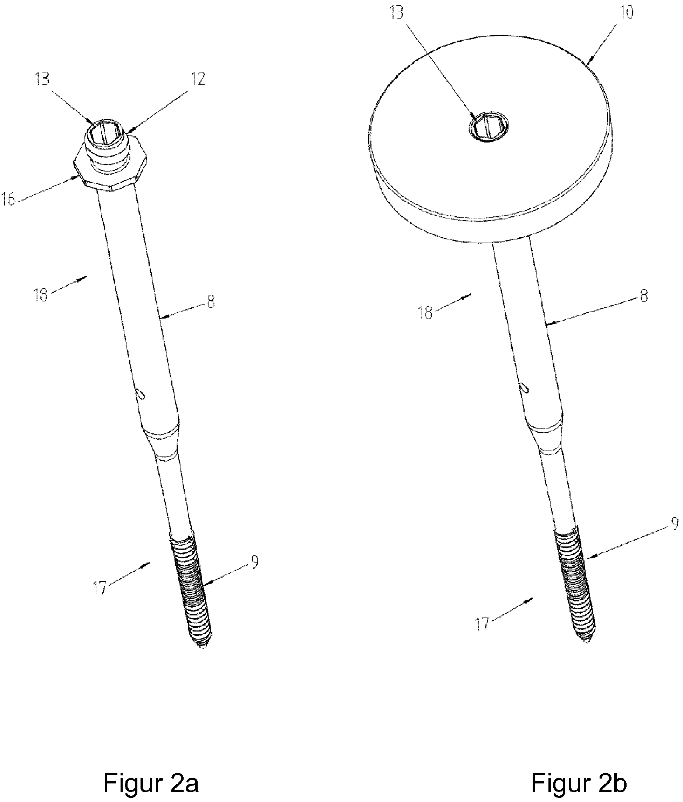

Die in Figur 1a gezeigte Ausführungsform des Befestigungssystems 1 besteht aus einer Dübelhülse 4, einem Spreizelement 8 und einer Abdeckscheibe 10. Die Dübelhülse 4 weist eine Spreizzone 5 und einen Halteteller 7 auf. Das Spreizelement 8 weist ein Spreizmittel 9 (gezeigt in Figuren 2a und 2b) zum Aufspreizen der Spreizzone 5 der Dübelhülse 4 auf und an dem zweiten Ende 18 (gezeigt in Figuren 2a und 2b) ist die Abdeckscheibe 10 angeordnet.

Zur Befestigung eines Dämmstoffs 2 an einem Untergrund 3 kann, wie in Figur 1a gezeigt, die Dübelhülse 4 in einer Öffnung in dem Dämmstoff 2 und in einer Öffnung 6 in dem Untergrund 3 angeordnet werden, wobei vorzugsweise die Spreizzone 5 der Dübelhülse 4 in der Öffnung 6 in dem Untergrund 3 angeordnet wird. Dieser Vorgang wird auch als Setzen bezeichnet. Die Dübelhülse 4 kann alleine in der Öffnung angeordnet werden oder zusammen mit einem in der Dübelhülse 4 angeordneten oder befestigten Spreizelement 8.

In der in Figur 1a gezeigten Ausführungsform ist mit dem Endabschnitt des zweiten Endes 18 des Spreizelements 8 eine Abdeckscheibe 10 aus einem Dämmstoffmaterial fest verbunden. Dieses Dämmstoffmaterial kann beispielsweise das gleiche Material sein, wie der Dämmstoff 2.

In der in Figur 1a gezeigten Ausführungsform weist die Dübelhülse 4 an dem Halteteller 7 ein Schneidmittel 14 auf, um mit Hilfe des Haltetellers 7 die Ausnehmung 11 in dem Dämmstoff 2 bilden zu können. Wie oben erläutert, gibt es zahlreiche Möglichkeiten derartige Ausnehmungen zu bilden. Das an dem Halteteller 7 angeordnete Schneidmittel 14 ist lediglich eine Möglichkeit und die vorliegende Erfindung ist nicht auf dieses Mittel zum Bilden der Ausnehmung 11 beschränkt.

Bei der in Figur 1a gezeigten Ausführungsform wird durch das Eintreiben des Spreizelements 8 auch der Halteteller 7 der Dübelhülse 4 in den Dämmstoff 2 bewegt und das an dem Halteteller 7 angeordnete Schneidmittel 14 sorgt für ein Einschneiden des Dämmstoffs 2 am Umfang des Haltetellers 7. Der unter dem Halteteller 7 liegende Dämmstoff 2, der durch das Einschneiden von dem restlichen Dämmstoff 2 teilweise getrennt wurde, kann so beim Eintreiben des Spreizelements 8 durch den sich in den Dämmstoff 2 bewegenden Halteteller 7 komprimiert werden. Die dadurch entstehende Ausnehmung 11 wird durch die Abdeckscheibe 10 des Spreizelements 8 verschlossen. In der in Figur 1a gezeigten Ausführungsform weist das Spreizelement 8 ein Mitnahmemittel 16 auf, mit dessen Hilfe die Drehbewegung des Spreizelements 8 auf den Halteteller 7 der Dübelhülse 4 übertragen wird, um das Einschneiden zu unterstützen.

Damit sich während dem Bewegen des Haltetellers 7 der Dübelhülse 4 in den Dämmstoff nicht auch die Spreizzone 5 der Dübelhülse 4 bewegt, weist die Dübelhülse 4 in dieser Ausführungsform ein Bewegungsmittel 15 auf. In Figur 1a wird dieses Bewegungsmittel 15 durch eine Sollbruchstelle realisiert.

Wenn das Spreizelement 8 mit der daran angeordneten Abdeckscheibe 10 in die Dübelhülse 4 eingetrieben wird, bewegt sich die Abdeckscheibe 10 in die Ausnehmung 11 und schließt die Ausnehmung 11 in dem Dämmstoff 2 oberflächenbündig ab. In der gezeigten Ausführungsform ist zumindest der Umfang der Abdeckscheibe 10 mit dem Dämmstoff 2 in Kontakt, um die Ausnehmung 11 komplett abzuschließen.

Figur 1b zeigt die in Figur 1a gezeigte Ausführungsform im vollständig montierten Zustand, das heißt nach dem Eintreiben des Spreizelements 8. In diesem Zustand ist die Abdeckscheibe 10 in der Ausnehmung 11 in dem Dämmstoff 2 oberflächenbündig angeordnet. Unter der Abdeckscheibe 10 befindet sich der Halteteller 7, der in dieser Ausführungsform ein Schneidmittel 14 aufweist, mit dem die Ausnehmung 11 gebildet wurde.

Das Eintreiben des Spreizelements 8 kann auf unterschiedliche Arten realisiert werden. Beispielsweise kann ein Vortriebswerkzeug verwendet werden, dass über ein Vortriebsmittel 13 des Spreizelements 8 das Eintreiben des Spreizelements 8 bewirken kann. Das Vortriebswerkzeug kann beispielsweise ein Schraubwerkzeug mit einer Schraubgeometrie sein, die es ermöglicht die radiale Bewegung beziehungsweise Rotationsbewegung des Schraubwerkzeugs auf das Vortriebsmittel 13 des Spreizelements 8 zu übertragen. Durch eine Rotationsbewegung des Vortriebsmittels 13 wird das Spreizelement 8 in die Dübelhülse 4 eingetrieben. Dadurch wird die Spreizzone 5 der Dübelhülse aufgespreizt und somit die Dübelhülse 4 in der Öffnung 6 in dem Untergrund 3 verankert. In der vorliegenden Ausführungsform wird während des Eintreibens des Spreizelements 8 in die Dübelhülse 4 der Halteteller 7 relativ zu der Spreizzone 5 in den Dämmstoff 2 bewegt. Hierfür weist die Dübelhülse 4 in der in Figur 1b gezeigten Ausführungsform mindestens ein Bewegungsmittel 15 auf.

Figuren 2a und 2b zeigen perspektivische Seitenansichten einer Ausführungsform des in Figur 1 gezeigten Spreizelements 8 ohne und mit Abdeckscheibe.

In der in Figur 2a gezeigten Ausführungsform ist das Spreizelement 8 eine Spreizschraube. Das Spreizmittel 9 wird durch ein Gewinde realisiert, welches sich am ersten Ende 17 des Spreizelements 8 befindet. In diesem Fall ist das Eintreiben des Spreizelements 8 zumindest teilweise eine Schraubbewegung mit der das Spreizmittel 9 welches ein Gewinde aufweist in die Spreizzone 5 der Dübelhülse 4 bewegt wird.

Vorzugsweise besteht das Spreizelement 8 aus Kunststoff. Das Spreizelement 8 kann aber auch aus anderen Materialen, wie zum Beispiel aus Metall, gefertigt sein.

In der in Figur 2a gezeigten Ausführungsform des Spreizelements 8 ist keine Abdeckscheibe 10 gezeigt, um zu veranschaulichen, wie die Abdeckscheibe 10 beispielsweise an dem Spreizelement 8 angeordnet sein kann. In dieser Ausführungsform weist das Spreizelement ein Verbindungsmittel 12 in der Form eines Gewindes auf. Diese Gewinde ist an dem Endabschnitt des Spreizelements, also dem Abschnitt des zweiten Endes 18, der von dem ersten Ende des Spreizelements am weitesten entfernt ist. Mit Hilfe dieses Gewindes kann eine Abdeckscheibe 10 die beispielsweise aus einem Dämmstoffmaterial bestehen kann einfach auf das Spreizelement 8 aufgedreht beziehungsweise aufgeschraubt werden. Dadurch wird eine einfache aber auch feste Verbindung realisiert, die auch beim Einführen der Abdeckscheibe 10 in die Ausnehmung 11 hält.

In Figur 2a ist auch eine beispielhafte Ausführungsform für das Vortriebsmittel 13 veranschaulicht. In dieser Ausführungsform ist das Vortriebsmittel 13 durch eine Öffnung an dem zweiten Ende 18 des Spreizelements 8 realisiert. Diese Öffnung kann beispielsweise einen sechseckigen Querschnitt aufweisen, so dass ein entsprechendes Werkzeug einfach eine Drehbewegung auf das Spreizmittel 9 übertragen kann.

Figur 2a zeigt auch ein Beispiel für ein Mitnahmemittel 16. In diesem Fall ist dies ein Vorsprung an dem Spreizelement 8, der an der dem ersten Ende 17 des Spreizelements 8 zugwandten Seite der Abdeckscheibe 10 angeordnet ist. Ein derartiges Mitnahmemittel 16 bewirkt, dass beim Eintreiben des Spreizelements 8, wenn notwendig, auch der Halteteller 7 der Dübelhülse 4 mitgedreht und eingetrieben wird. Dies kann insbesondere notwendig sein, wenn der Halteteller 7 die Ausnehmung 11 in dem Dämmstoff 2 bilden soll. Das Mitnahmemittel 16 kann auch einen bestimmten Querschnitt aufweisen. In diesem Beispiel ist der Querschnitt achteckig, um eine radiale Bewegung des Spreizelements 8 auf die Dübelhülse 4 beziehungsweise den Halteteller 7 der Dübelhülse 4 zu übertragen. Hierfür weist der Halteteller 7 vorzugsweise ein entsprechendes Gegenstück auf.

Figur 2b zeigt die in Figur 2a gezeigte Ausführungsform des Spreizelements 8 nun mit daran angeordneter Abdeckscheibe 10. In der gezeigten Ausführungsform ist die Abdeckscheibe 10 fest, über das um das Vortriebsmittel 13 angeordnete Verbindungsmittel 12, mit dem Spreizelement 8 verbunden. Hierdurch wird vermieden, dass eine Öffnung in der Abdeckscheibe 10 entsteht. Der Bereich zwischen Abdeckscheibe 10 und Halteteller 7 wird dadurch zuverlässig, ohne eine Verminderung der Dämmeigenschaften, abgedichtet.

## Patentansprüche

1. Ein Befestigungssystem (1) insbesondere zur Befestigung von Dämmstoff (2) an einem Untergrund (3), aufweisend:
eine Dübelhülse (4), wobei die Dübelhülse (4) eine Spreizzone (5) zum Halten der Dübelhülse (4) in einer Öffnung (6) in dem Untergrund (3) und einen Halteteller (7) zum Halten des Dämmstoffs (2) aufweist,
ein Spreizelement (8), wobei das Spreizelement (8) ausgestaltet ist, um zumindest teilweise in der Dübelhülse (4) angeordnet werden zu können und das Spreizelement (8) an einem ersten Ende (17) ein Spreizmittel (9) zum Aufspreizen der Spreizzone (5) der Dübelhülse (4) aufweist, und
mindestens eine Abdeckscheibe (10) aus Dämmstoffmaterial, wobei die Abdeckscheibe (10) aus Dämmstoffmaterial mit einem zweiten Ende (18) des Spreizelements (8) verbunden ist das dem ersten Ende (17) gegenüberliegt, wobei die Abdeckscheibe (10) aus Dämmstoffmaterial derart ausgestaltet und mit dem Spreizelement (8) verbunden ist, dass durch Eintreiben des Spreizelements (8) in die Dübelhülse (4) sich die Abdeckscheibe (10) in eine Ausnehmung (11) in dem Dämmstoff (2) in dem sich der Halteteller (7) der Dübelhülse (4) nach der Montage befindet bewegt und diese oberflächenbündig abschließt.

2. Das Befestigungssystem (1) nach Anspruch 1, **dadurch gekennzeichnet, dass** das Spreizelement (8) eine Schraube ist.

3. Das Befestigungssystem (1) nach einem der Ansprüche 1 oder 2, **dadurch gekennzeichnet, dass** das Spreizelement (8) an dem zweiten Ende (18) mindestens ein Vortriebsmittel (13) aufweist zum Einbringen des Spreizelements (8) in die Dübelhülse (4).

4. Das Befestigungssystem (1) nach Anspruch 3, **dadurch gekennzeichnet, dass** das Vortriebsmittel (13) eine Werkzeugaufnahme ist.

5. Das Befestigungssystem (1) nach einem der Ansprüche 1 bis 3, **dadurch gekennzeichnet, dass** das Spreizelement (8) ein Verbindungsmittel (12) aufweist zum Verbinden des Spreizelements (8) mit der Abdeckscheibe (10).

6. Das Befestigungssystem (1) nach Anspruch 5, **dadurch gekennzeichnet, dass** das Verbindungsmittel (12) eine Schraubverbindung ist.

7. Das Befestigungssystem (1) nach Anspruch 1, **dadurch gekennzeichnet, dass** die Abdeckscheibe (10) rund ist.

8. Das Befestigungssystem (1) nach Anspruch 7, **dadurch gekennzeichnet, dass** die Abdeckscheibe (10) an ihrem Umfang eine Gewindegeometrie mit Schraubensteigung aufweist.

9. Das Befestigungssystem (1) nach Anspruch 1, **dadurch gekennzeichnet, dass** der Halteteller (7) an der dem Dämmstoff (2) zugwandten Seite mindestens ein Schneidmittel (14) aufweist.

10. Das Befestigungssystem (1) nach Anspruch 9, **dadurch gekennzeichnet, dass** das mindestens eine Schneidmittel (14) mindestens einen Schneidzahn aufweist.

11. Das Befestigungssystem (1) nach Anspruch 1, **dadurch gekennzeichnet, dass** die Dübelhülse (4) mindestens ein Bewegungsmittel (15) aufweist zum Ermöglichen einer Relativbewegung des Haltetellers (7) zur Spreizzone (5).

12. Das Befestigungssystem (1) nach Anspruch 11, **dadurch gekennzeichnet, dass** das Bewegungsmittel (15) eine Sollbruchstelle in der Verbindung des Haltetellers (7) mit der Dübelhülse (4) ist.

13. Das Befestigungssystem (1) nach Anspruch 1, **dadurch gekennzeichnet, dass** das Spreizelement (8) mindestens ein Mitnahmemittel (16) zur wirksamen Verbindung des Spreizelements (8) mit dem Halteteller (7) aufweist.

14. Das Befestigungssystem (1) nach Anspruch 1, **dadurch gekennzeichnet, dass** das Mitnahmemittel (16) eine Schraubenantriebsgeometrie aufweist.

15. Verfahren zur Befestigung von Dämmstoff (2) an einem Untergrund (3), aufweisend:
Bohren einer Öffnung (6) durch den Dämmstoff (2) in den Untergrund (3);
Setzen einer Dübelhülse (4) und eines Spreizelements (8) mit einer damit verbundenen Abdeckscheibe (10) aus Dämmstoffinaterial in die Öffnung (6), wobei die Abdeckscheibe (10) mit einem zweiten Ende (18) des Spreizelements (8) verbunden ist, das einem ersten Ende (17) von dem Spreizelement (8) gegenüberliegt und wobei ein Halteteller (7) an der Dübelhülse (4) den Dämmstoff (2) an dem Untergrund (3) fixiert;
Eintreiben des Spreizelements (8) in die Dübelhülse (4) bis die mit dem zweiten Ende (18) des Spreizelements (8) verbundene Abdeckscheibe (10) aus Dämmstoffmaterial oberflächenbündig mit der Oberfläche des Dämmstoffs (2) abschließt.

## Claims

1. A fastening system (1), in particular for fastening of insulation (2) to a substructure (3), comprising:
a dowel sleeve (4), wherein the dowel sleeve (4) comprises an expansion zone (5) for holding the dowel sleeve (4) in an opening (6) in the substructure (3) and a holding plate (7) for holding the insulation (2),
an expansion element (8), wherein the expansion element (8) is adapted to be arranged at least partially in the dowel sleeve (4) and the expansion element (8) comprises at a first end (17) an expansion means (9) for expanding the expansion zone (5) of the dowel sleeve (4), and
at least one covering disk (10) made of insulation material, wherein the covering disk (10) made of insulation material is connected to a second end (18) of the expansion element (8) which is opposite to the first end (17), wherein the covering disk (10) made of insulation material is adapted and connected to the expansion element (8) such that by driving the expansion element (8) in the dowel sleeve (4) the covering disk (10) moves in a recess (11) in the insulation (2) in which the holding plate (7) of the dowel sleeve (4) is arranged after installation and closes this recess (11) so that the surfaces are flush.

2. The fastening system (1) according to claim 1, **characterized in that** the expansion element (8) is a screw.

3. The fastening system (1) according to claims 1 or 2, **characterized in that** the expansion element (8) comprises at the second end (18) at least one driving means (13) for moving the expansion element (8) in the dowel sleeve (4).

4. The fastening system (1) according to claim 3, **characterized in that** the driving means (13) is a tool holder.

5. The fastening system (1) according to any of claims 1 to 3, **characterized in that** the expansion element (8) comprises a connection means (12) for connecting the expansion element (8) with the covering disk (10).

6. The fastening system (1) according to claim 5, **characterized in that** the connecting means (12) is a threaded connection.

7. The fastening system (1) according to claim 1, **characterized in that** the covering disk (10) is circular.

8. The fastening system (1) according to claim 7, **characterized in that** the covering disk (10) comprises at its circumference a thread geometry with an inclination.

9. The fastening system (1) according to claim 1, **characterized in that** the holding plate (7) comprises at least one cutting means (14) at the side facing the insulation (2).

10. The fastening system (1) according to claim 9, **characterized in that** the at least one cutting means (14) comprises at least one cutting tooth.

11. The fastening system (1) according to claim 1, **characterized in that** the dowel sleeve (4) comprises at least one moving means (15) to enable a movement of the holding plate (7) relatively to the expansion zone (5).

12. The fastening system (1) according to claim 11, **characterized in that** the moving means (15) is a predetermined breaking point in the connection of the holding plate (7) with the dowel sleeve (4).

13. The fastening system (1) according to claim 1, **characterized in that** the expansion element (8) comprises at least one coupling means (16) for effectively connecting the expansion element (8) with the holding plate (7).

14. The fastening system (1) according to claim 1, **characterized in that** the coupling means (16) comprises a screw drive geometry.

15. Method for fastening of insulation (2) to a substructure (3), comprising:
drilling an opening (6) through the insulation (2) in the substructure (3);
placing a dowel sleeve (4) and an expansion element (8) with a covering disk (10) made of insulation material connected to the expansion element (8) in the opening (6), wherein the covering disk (10) is connected to a second end (18) of the expansion element (8) which is opposite to a first end (17) of the expansion element (8) and wherein a holding plate (7) at the dowel sleeve (4) fixes the insulation (2) at the substructure (3);
driving the expansion element (8) in the dowel sleeve (4) until the surface of the covering disk (10) which is made of insulation material and which is connected to the second end (18) of the expansion element (8) and the surface of the insulation (2) are flush.

## Revendications

1. Système de fixation (1), en particulier pour la fixation d'un isolant (2) à un support (3), comprenant :
une douille de cheville (4), la douille de cheville (4) comprenant une zone expansible (5) pour maintenir la douille de cheville (4) dans une ouverture aménagée dans le support (3), et un disque de maintien (7) pour maintenir l'isolant (2),
un élément expansible (8), l'élément expansible (8) étant configuré de façon à pouvoir être au moins partiellement disposé dans la douille de cheville (4), et l'élément expansible (8) comprenant à une première extrémité (17) un moyen d'expansion (9), pour expanser la zone expansible (5) de la douille de cheville (4), et
au moins un disque de recouvrement (10) en matériau isolant, le disque de recouvrement (10) en matériau isolant étant relié à une deuxième extrémité (18) de l'élément expansible (8), opposée à la première extrémité (17), le disque de recouvrement (10) en matériau isolant étant configuré, et relié à l'élément expansible (8), de telle sorte que, sous l'effet d'un enfoncement de l'élément expansible (8) dans la douille de cheville (4), le disque de recouvrement (10) soit déplacé dans un évidement (11) aménagé dans l'isolant (2) dans lequel se trouve le disque de maintien (7) de la douille de cheville (4) après le montage, et obture cet évidement à fleur de la surface.

2. Système de fixation (1) selon la revendication 1, **caractérisé en ce que** l'élément expansible (8) est une vis.

3. Système de fixation (1) selon l'une des revendications 1 ou 2, **caractérisé en ce que** l'élément expansible (8) comprend à la deuxième extrémité (18) au moins un moyen d'avancement (13), pour introduire l'élément expansible (8) dans la douille de cheville (4).

4. Système de fixation (1) selon la revendication 3, **caractérisé en ce que** le moyen d'avancement (13) est un raccordement d'outil.

5. Système de fixation (1) selon l'une des revendications 1 à 3, **caractérisé en ce que** l'élément expansible (8) comprend un élément d'assemblage (12), pour assembler l'élément expansible (8) au disque de recouvrement (10).

6. Système de fixation (1) selon la revendication 5, **caractérisé en ce que** l'élément d'assemblage (12) est un assemblage à vis.

7. Système de fixation (1) selon la revendication 1, **caractérisé en ce que** le disque de recouvrement (10) est circulaire.

8. Système de fixation (1) selon l'une des revendications 7, **caractérisé en ce que** le disque de recouvrement (10) comprend sur sa périphérie une géométrie de filetage avec pas de vis.

9. Système de fixation (1) selon la revendication 1, **caractérisé en ce que** le disque de maintien (7) comprend au moins un moyen de coupe (14) sur son côté dirigé vers le matériau isolant (2).

10. Système de fixation (1) selon la revendication 9, **caractérisé en ce que** le ou les moyens de coupe (14) comprennent au moins une dent coupante.

11. Système de fixation (1) selon la revendication 1, **caractérisé en ce que** la douille de cheville (4) comprend au moins un moyen de mouvement (15), pour permettre un mouvement relatif du disque de soutien (7) par rapport à la zone expansible (5).

12. Système de fixation (1) selon la revendication 11, **caractérisé en ce que** le moyen de mouvement (15) est un point destiné à la rupture dans la liaison du disque de maintien (7) à la douille de cheville (4).

13. Système de fixation (1) selon la revendication 1, **caractérisé en ce que** l'élément expansible (8) comprend au moins un moyen d'entrainement (16), pour une liaison active de l'élément expansible (8) au disque de maintien (7).

14. Système de fixation (1) selon la revendication 1, **caractérisé en ce que** le moyen d'entrainement (16) est une géométrie d'entraînement à vis.

15. Procédé pour la fixation d'un matériau isolant (2) à un support (3), comprenant :
le perçage d'une ouverture (6) à travers l'isolant (2), pénétrant dans le support (3) ;
la mise en place, dans l'ouverture (6), d'une douille de cheville (4) et d'un élément expansible (8) avec un disque de recouvrement (10), qui y est relié, en matériau isolant, le disque de recouvrement (10) étant relié à une deuxième extrémité (18) de l'élément expansible (8), qui est opposée à une première extrémité (17) de l'élément expansible (8), un disque de maintien (7) contre la douille de cheville (4) fixant l'isolant (2) au support (3) ;
l'enfoncement de l'élément expansible (8) dans la douille de cheville (4), jusqu'à ce que le disque de recouvrement (10) en matériau isolant relié à la deuxième extrémité (18) de l'élément expansible (8) obture avec affleurement la surface du matériau isolant (2).
